# EUROPEAN PATENT APPLICATION

(11) **EP 3 492 923 A2**
(43) Date of publication of application: **05.06.2019**
(21) Application number: 18209200.7
(22) Date of filing: 29.11.2018
(51) Int. Cl.: G01N 35/00, G01N 35/02

(54) **DIAGNOSTIC ANALYZER SYSTEMS**

(30) Priority: 29.11.2017 LU 100530
(71) Applicant: Stratec SE, 75217 Birkenfeld (DE)
(72) Inventor: GRÖHBÜHL, Bernd, 76275 Ettlingen (DE)
(74) Representative: Tegethoff, Sebastian

(57) **Abstract**

The invention relates to a system of multiple diagnostic analyzer systems comprising a modular reference base comprising a basic support structure that carries supports for at least one analyzer and its corresponding supplies infrastructure.

## Description

### Field of the invention

The field of the present invention relates to multiple diagnostic analyzer systems and their arrangement.

### Background of the invention

Automated analyser systems for use in clinical diagnostics and life sciences are produced by several companies. For example, the Stratec Biomedical AG, Birkenfeld, Germany, produces a number of devices for specimen handling and detection for use in automated analyser systems and other laboratory instrumentation.

Preparation and analysis of samples is part of everyday practice in laboratory or clinical work. Often the preparation requires mixing of several components of a sample. Mixing can be required, for instance, after a further component to a sample has been added, or in the case of particles suspended in a liquid sample.

Stratec Biomedical AG has designed so far stand-alone instruments as well as instruments with interfaces for neighboring instruments. The instruments can be individually addressed to meet the specific needs of the project.

Stratec Biomedical AG provides analyzer integrations to connect to Laboratory Automation Systems for centralized single sample supply (LAS). These have been designed in accordance with existing international standards.

However, until now there has been no generic design approach to take care of work-cell specific needs for alignment of analyzers and supplies components.

Only a few manufacturers provide a so called LAS automation. Standards provide information on how to design analyzers to be able to connect to LAS. Generic installation and alignment systems and methods are known, which support highly modular analyzer and supplies integration.

Document WO2014/121216 A1 describes an instrument docking apparatus and systems and methods related thereto. The disclosed instrument docking apparatus may be used to position an instrument in a defined position relative to one or more additional instruments on a floor.

Within an individually installed, fixed and aligned multi-analyzer work-cell, several tasks that need to be performed over lifetime are much more complicated and time consuming when compared to a stand-alone analyzer. The tasks can be summarized as follows:
- Initial installation: Lab floors tend to be not perfectly even, installing a stand-alone analyzer is relatively easy by just leveling it by its adjustable feet. Multiple interacting analyzers in a work-cell need much more effort for a proper aligned installation.
- The extension of an existing installation implies an additional comparable effort.
- Analyzer service: Service and maintenance tasks are often performed via front and side access to analyzers. Side access in a multi-analyzer work-cell line is impossible unless the specific instrument that needs to be serviced is taken out of the line. Placing it back drives the need for adjustment and alignment each time again.
- The exchange of analyzers or devices or repair work on analyzers or devices causes comparable effort.
- Simply positioning the analyzers is only a minor part of the overall effort, but setting up and aligning a LAS (lab automation system) to supply multiple analyzers with patient samples is of significant effort and once done not very flexible regarding access or change.

### Object of the invention

It is an object of the invention to provide a strategic hardware approach to align analyzers and components of centralized supplies for achieving best support installation, service tasks, replacement and general access without or with only limited work-cell down-time if an anlyser has be serviced.

### Summary of the invention

The present invention provides a system for arranging multiple analyzer systems, comprising a modular reference base for arranging at least one analyzer system and at least one separate supply device for the at least one analyzer system; wherein the modular reference base comprises a guide and rail system to move the at least one analyzer system in a work, maintenance or exchange position, wherein the at least one separate supply device remains in a fixed position on the at least one modular reference base.

In a further aspect of the invention, the modular reference base may comprise a power and data connection in form of a dock-connection.

It is envisaged that the at least one supply device is a track device for transporting samples and/or material for processing of samples to the at least one analyzer system

It is intended that the track device may comprise a guide and rail system to supply the at least one analyzer system with samples and/or material for processing samples.

The guide and rail system of the track device shall be configured to move samples in all three spatial axes.

In a further aspect of the invention, the track device is connected to an input/output device.

It is envisaged that the input/output device may encompass an access for loading and unloading samples and/or material for processing samples.

The input/output device can be connected to liquid reservoirs for providing liquids necessary for processing samples.

The modular reference base may be configured to arrange analyzer systems of different size.

Another object of the present invention refers to the use of a system comprising a modular reference base for arranging at least one analyzer system and at least one separate supply device for the at least one analyzer system; wherein the modular reference base comprises a guide and rail system to move the at least one analyzer system in a work, maintenance or exchange position, wherein the at least one separate supply device remains in a fixed position on the at least one modular reference base.

Still other aspects, features, and advantages of the present invention are readily apparent from the following detailed description, simply by illustrating a preferable embodiments and implementations. The present invention is also capable of other and different embodiments and its several details can be modified in various obvious respects, all without departing from the spirit and scope of the present invention. Accordingly, the drawings and descriptions are to be regarded as illustrative in nature, and not as restrictive. Additional objects and advantages of the invention will be set forth in part in the description which follows and in part will be obvious from the description, or may be learned by practice of the invention.

### Summary of the figures

The invention will now be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention. It shows:
- Figure 1: Schematic illustration of four analyzers and one input/output device
- Figure 2: Illustration of figure 1 with shows one analyzer that has been pulled out from the work-cell installation
- Figure 3: Illustration of figure 1 with shows one analyzer that has been removed from the work-cell installation
- Figure 4: Schematic of one analyzer and corresponding track device as supply device

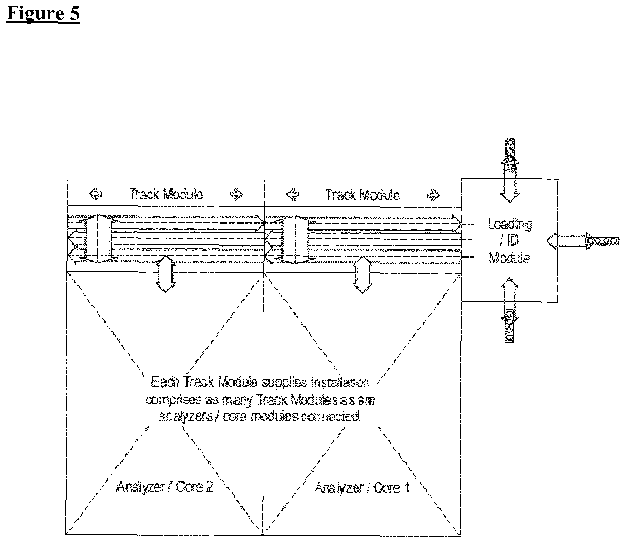

- Figure 5: Schematic of a work-cell of two analyzers with corresponding track device and a centralized patient sample supply

### Detailed description of the invention

The present invention refers to analyzer that are arranged in a work-cell (cluster) configuration, where spatial orientation and alignment between the analyzers and their centralized supplies for e.g. patient samples is of relevance.

Material for processing means within the context of the present invention liquids like samples, buffer or reaction mixtures or components that may be stored in container like bottles, reaction tubes or wells or multi-well plates. The term also means any other material that may be necessary for processing or analyzing a sample like pipette tips or waste container for transporting waste in liquid or solid form out of an analyzer.

The invention provides a modular platform (reference base) on which work-cell bound analyzers and track device to supply these analyzers can be installed, proper aligned, easily accessed, and electrically connected. The figures show a schematic illustration of a work-cell with four analyzers, four corresponding track device to supply the analyzers and one I/O (input / output) device to act as a user interface for manual loading and unloading of patient samples on racks to and from the system.

As mentioned, accurate interfacing and accurate positioning of all components is of major relevance for a fully functional and reliable operation of supply devices like track devices together with connected analyzers. In this chapter a strategy to allow for safe, fast and reliable installation, alignment, operation, service and replacement of components is introduced. The fundamental idea for it consists of a modular reference base. That base can carry one analyzer and its corresponding separate supply device.

Each modular reference base carries supports for one analyzer and its corresponding supplies device. The analyzer support contains a guide and rail system that allows for pulling an analyzer towards a position where it is best accessible by field service representatives. This position is designed depending on layout and installation. While an analyzer is pulled out, the corresponding separate supply device will stay in its position so that it can support other analyzers, which do not have to be stopped when an analyzer is pulled out.

The above described interface does further incorporate an electrical connection for a power supply of each analyzer. That connection is established in form of a dock-connector like it is used for e.g. connecting a notebook computer to a desk based PC equipment.

The interface does also comprise electronic connectors to allow for instrument control, communication and data handling between connected analyzers and/or external workstation software. Connected in such a way, it is possible for an analyzer to report its status, support timing and scheduling of tests within the work-cell or request supply materials. With bidirectional interfaces, an external software can access and control connected analyzers.

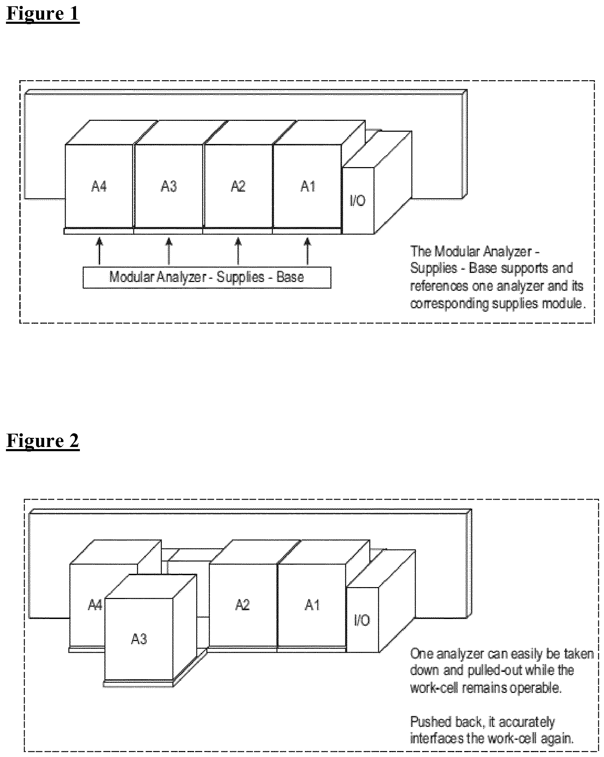

As said, the modular reference base acts as an installation support for one analyzer and one separate supply device. One reference base is located under every analyzer/supply device. Multiple reference bases are connected (e.g. linearly) and e.g. finally interface an input / output device where supply materials can be loaded and unloaded. An example consisting of four analyzers, four track devices as supply devices and one input/output device is illustrated in figure 1.

Figure 2 shows an analyzer that has been pulled out from the work-cell installation. In this position the analyzer can e.g. be serviced while the rest of the work-cell is fully functional.

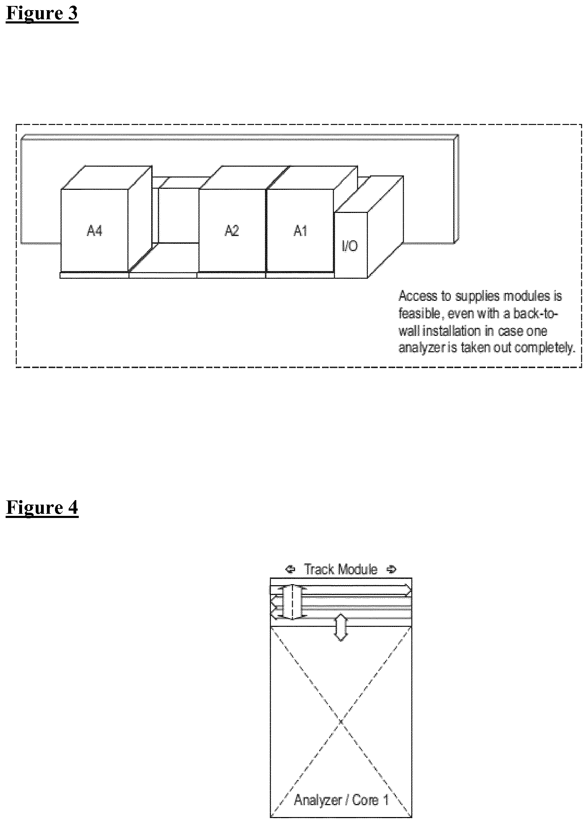

One analyzer has been removed completely in the illustration shown in figure 3. Easy access to the track devices is possible, even with the whole installation being located directly at the wall. Easy exchange of analyzers can be supported in case that all analyzers share an identical interface design to the reference base.

An advantage of the subject matter of the invention is that it offers a generic approach to install analyzers and supplies devices in a work-cell configuration, resulting in a reduction of design and installation variations and training efforts.

It is further advantageous that the subject matter of the invention can assist in mitigating the influences of imperfections in the installation environment like uneven lab floors etc.

The subject matter of the invention allows for an easy access to analyzers and supplies devices in a work-cell configuration and further provides this accessibility without having the need to take a whole work-cell out of operation. Figure 4 shows a schematic of one analyzer with corresponding supply device that is a track device.

The subject matter of the invention further allows for installations of a work-cell in a back-to-wall orientation resulting from the aforementioned advantages.

Using the above described invention has further the advantages of a reliable and fast re-positioning of components after access and easy power supply connectivity.

The subject matter of the above described invention further allows easy communication and data handling between connected analyzers and/or external workstation software.

The present disclosure provides an extensible modular approach that includes multiple analyzers as well as their separate supply devices of a work-cell in a way to be able to take one or more analyzers out of the work-cell (e.g. for service), without the need to shut the complete work-cell down and make it inoperable due to the separate supply devices.

It is obvious for a skilled person that a wireless power supply solution for the analyzers is also within the scope of the instant disclosure. A further embodiment would incorporate a wireless implementation of electronics connectivity for instrument control, communication handling, data management between connected analyzers and/or external workstation software.

The foregoing description of the preferred embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein.

## Claims

1. A system for arranging multiple analyzer systems, comprising a modular reference base for arranging at least one analyzer system and at least one separate supply device for the at least one analyzer system; wherein the modular reference base comprises a guide and rail system to move the at least one analyzer system in a work, maintenance or exchange position, wherein the at least one separate supply device remains in a fixed position on the at least one modular reference base.

2. The system of claim 1, wherein the reference base comprises a power and data connection in form of a dock-connection.

3. The system of claims 1 or 2, wherein the at least one supply device is a track device for transporting samples and/or material for processing of samples to the at least one analyzer system.

4. The system of claim 3, wherein the track device comprises a guide and rail system to supply the at least one analyzer system with samples and/or material for processing samples.

5. The system of any one of claims 1 to 4, wherein the guide and rail system of the track device is configured to move samples in all three spatial axes.

6. The system of any one of claims 1 to 5, wherein the track device is connected to an input/output device.

7. The system of claim 6, wherein the input/output device has an access for loading and unloading samples and/or material for processing samples.

8. The system of any one of claims 6 or 7, wherein the input/output device is connected to liquid reservoirs for providing liquids necessary for processing samples.

9. The system of any one of claims 1 to 8, wherein the at least one modular reference is configured to arrange analyzer systems of different size.

10. The use of a system comprising a modular reference base for arranging at least one analyzer system and at least one separate supply device for the at least one analyzer system; wherein the modular reference base comprises a guide and rail system to move the at least one analyzer system in a work, maintenance or exchange position, wherein the at least one separate supply device remains in a fixed position on the at least one modular reference base.
